# EUROPÄISCHE PATENTSCHRIFT

(11) **EP 1 069 846 B1**
(45) Veröffentlichungstag und Bekanntmachung des Hinweises auf die Patenterteilung: **11.12.2002**
(21) Anmeldenummer: 99919204.0
(22) Anmeldetag: 07.04.1999
(51) Int. Cl.: A46B 5/00, A46B 9/04

(54) **REINIGUNGSBÜRSTE, INSBESONDERE ZAHNBÜRSTE**
CLEANING BRUSH, ESPECIALLY A TOOTHBRUSH
BROSSE DE NETTOYAGE, NOTAMMENT BROSSE A DENTS

(30) Priorität: 09.04.1998 DE 19816098
(43) Veröffentlichungstag der Anmeldung: 24.01.2001
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Lichti, Heiner, Dipl.-Ing.
(86) Internationale Anmeldenummer: EP9902342
(87) Internationale Veröffentlichungsnummer: WO99052395

(56) Entgegenhaltungen:
- EP-A- 0 310 482
- EP-A- 0 758 534
- WO-A-96/02165
- WO-A-97/07707
- US-A- 2 445 657
- US-A- 5 373 602
- PATENT ABSTRACTS OF JAPAN vol. 098, no. 006, 30. April 1998 (1998-04-30) & JP 10 033261 A (LION CORP), 10. Februar 1998 (1998-02-10)

## Beschreibung

Die Erfindung betrifft eine Reinigungsbürste aus Kunststoff, insbesondere Zahnbürste, mit einem Stiel und einem länglichen Bürstenkopf, der aus einem sich im Längsquerschnitt vom Stiel zum vorderen Ende des Bürstenkopfs verjüngenden Borstenträger und daran befestigten Borsten besteht, wobei der Borstenträger bei Überschreiten eines bestimmten Andrucks der Borsten an die zu reinigende Fläche elastisch nachgiebig auslenkbar ist.

Herkömmliche Zahnbürsten, deren Stiel und Bürstenkopf sowie gegebenenfalls ein dazwischen angeordneter, verjüngter Hals einstückig aus Kunststoff gespritzt sind, und deren Bürstenkopf mit Borstenbündeln besetzt ist, weisen je nach Dimensionierung der Querschnitte und Auswahl des Kunststoffs eine gewisse Elastizität auf, die jedoch den Besonderheiten bei der Zahn- und Mundpflege nicht gerecht wird. Diese Besonderheiten bestehen zunächst in der unterschiedlichen Außenkontur des Gebisses mit konvexen Außenflächen und konkaven Innenflächen, denen sich ein starrer Bürstenkopf nicht anpassen kann. Hinzu kommt die durch die Interdentalräume gegebenen Diskontinuitäten der Gebißkontur, wobei die Interdentalräume nur dann von den Borsten erreicht werden, wenn einerseits die Borsten eine ausreichende Elastizität aufweisen, um auf den freien Zahnflächen ausweichen zu können, andererseits der Andruck des Bürstenkopfs ausreichend groß ist. Andererseits müssen die Zahnbürste und insbesondere deren Borsten so gestaltet sein, daß keine lokalen Druckspitzen auftreten, die am Zahnschmelz, insbesondere aber an der Gingiva zu Verletzungen führen können.

Die Notwendigkeit der konstruktiven Anpassung der Zahnbürste an diese Besonderheiten sind von der Fachwelt bereits früh erkannt worden, wie sich aus den in beigefügter Liste angegebenen Druckschriften ergibt. Diese Druckschriften sind bei der nachfolgenden Erörterung des Standes der Technik mit den in der Liste verwendeten Ordnungszahlen zitiert.

Die in (1) beschriebene Zahnbürste besteht aus einem im wesentlichen biegesteifen Stiel und einem daran befestigten Bürstenkopf, dessen Längsquerschnitt sich zum vorderen Ende keilförmig verjüngt, um auch enge Bereiche der Mundhöhle ohne zu starkes Abbiegen der Borsten zu erreichen. Der Bürstenkopf besteht aus Gummi oder anderem nachgiebigen Material und einem darin eingebetteten biegsamen Versteifungsstab aus Stahl, der sich zum Ende des Bürstenkopfs hin verjüngt. Das Biegeverhalten des Bürstenkopfs wird ausschließlich durch diese stabförmige Einlage bestimmt, da die umgebende Gummihülle keinen nennenswerten Biegewiderstand hat. Die Einlage bestimmt in Verbindung mit dem am Stiel aufgebrachten Druck den Andruck auf die zu reinigenden Zähne bzw. auf das zu massierende Zahnfleisch. Durch die Verjüngung der Stahleinlage ergibt sich eine vom Stiel zum vorderen Ende des Bürstenkopfs abnehmende Federkonstante und - bei einem gegebenen Druck - eine zum vorderen Ende des Bürstenkopfs progressiv zunehmende Auslenkung des die Borsten aufnehmenden Borstenträgers. Diese Auslenkung erfolgt aufgrund der stabförmigen Ausbildung der Einlage auch quer zur Längsachse der Bürste, so daß der Bürstenkopf nicht zielgerecht geführt werden kann. Der Bürstenkopf ist mit dem Stiel über eine Metallhülse verbunden. Dadurch und durch die Stahleinlage ergibt sich eine kostenaufwendige Fertigung. Zudem entspricht die Zahnbürste aufgrund der Metallteile nicht mehr den heutigen Anforderungen.

Eine andere bekannte Ausführung (2) weist einen im wesentlichen starren Stiel auf, an den über eine Klebeverbindung ein Bürstenkopf aus flexiblem Material, z. B. Gummi, angebunden ist. Der Bürstenkopf ist zudem vom Stiel zum vorderen Ende hin verjüngt und im übrigen zu den Borsten hin konkav gekrümmt. Dadurch sollen einerseits die Außenkonturen des Gebisses im vorderen Zahnbereich umfaßt werden, während im Backenzahnbereich der Borstenkopf aufgrund seiner Gummielastizität ausweicht. Ebenso soll er sich durch Auslenken bis zu einer konvexen Krümmung an der Borstenseite der Innenkontur des Gebisses anpassen. Diese Eigenschaften lassen sich mit einem den Bürstenkopf bildenden einstückigen Formteil nicht oder nur unzureichend verwirklichen.

Bei der in (3) beschriebenen Zahnbürste ist der Bürstenkopf zweiteilig ausgebildet. Der stielnahe Bereich des Borstenträgers ist einstückig mit dem Stiel hergestellt und nicht biegefähig. Auf der Oberseite des Borstenträgers ist ein gummielastischer Abschnitt aufgeklebt, der das vordere Teil des Bürstenkopfs bildet und an der Vorderkante des hinteren Teils des Bürstenkopfs abknicken kann. Hiermit ist nur eine sehr unvollkommene Anpassung an die Gebißkontur möglich und im übrigen die Dauerstandfestigkeit der Zahnbürste aufgrund der Knick- und Scherkräfte am Übergang der beiden Teile des Bürstenkopfs völlig unzulänglich.

Eine Vielzahl von Vorschlägen in (4) bis (12) besteht darin, den Bürstenkopf in mehrere Segmente aufzuteilen, die stoffschlüssig über Kunststoffbrücken, über Federeinlagen oder mechanisch miteinander verbunden sind, wobei die Borstenbündel an den einzelnen Segmenten befestigt sind. Die zwischen den Segmenten vorhandenen Spalte versucht man bei einigen dieser bekannten Zahnbürste entweder durch entsprechende Formgebung der Segmente oder durch Ausfüllen mit einer anderen Kunststoffkomponente zu schließen. Diese Ausführungen wiederum sind fertigungstechnisch außerordentlich aufwendig und in der Dauerstandfestigkeit begrenzt. Zudem werden bei diesen bekannten Ausführungen entweder Spalte und Vertiefungen in Kauf genommen, oder lassen sich solche Vertiefungen und harte Kanten aus fertigungstechnischen Gründen nicht vermeiden. Sie genügen deshalb weder dem gebrauchstechnischen, noch den hygienischen Anforderungen.

Gleiches gilt für die bekannten Vorschläge in (13) bis (16), bei denen entweder der gesamte Bürstenkopf am Stiel angelenkt oder der Borstenbesatz in einzelne Segmente bis zu einzelnen Borstenbündeln aufgeteilt ist, die am Bürstenkörper gelenkig gelagert sind.

Der Erfindung liegt die Aufgabe zugrunde, eine Zahnbürste mit den Merkmalen des Oberbegriffs des Anspruchs 1, die aus (2) bekannt sind, so auszubilden, daß sich der Bürstenkopf insbesondere den Problemzonen des Gebisses, nämlich dessen Innenkontur mit variierendem Krümmungsradius optimal anpaßt.

Diese Aufgabe wird in einer ersten Ausführung dadurch gelöst, daß der Borstenträger aus zwei in dessen Längsrichtung hintereinander angeordneten und übergangslos miteinander verbundenen Abschnitten aus Werkstoffen verschiedener Eigenschaften und wenigstens der vordere Abschnitt aus einem Elastomer gebildet ist, und daß die Werkstoffe, die Querschnitte und die Biegelänge der Abschnitte so gewählt sind, daß der vordere Abschnitt mit kleinerem Krümmungsradius als der andere Abschnitt auslenkbar ist.

Durch die erfindungsgemäße Ausbildung wird zunächst jede Segmentierung des Bürstenkopfs, wie auch jede gelenkige Verbindung zwischen Teilen des Bürstenkopfs vermieden. Der Bürstenkopf bildet ein einheitliches Ganzes, weist aber gleichwohl ein über seine Länge differenziertes Biegeverhalten auf, indem der aus einem Elastomer gebildete vordere Abschnitt bei geringerer Andruckkraft und/oder stärkerer Krümmung der Gebißkontur stärker ausweicht als der andere Abschnitt des Bürstenkopfs, dessen Auslenkung bei stärkerem Andruck und/oder schwächerer Krümmung der Gebißkontur erfolgt, so daß sämtliche Zahnflächen auch an der Innenkontur des Gebisses von den Borsten bei annähernd gleichmäßigem Andruck erreicht werden.

Die beiden Abschnitte des Bürstenkopfs können stoffschlüssig, z. B. durch Schweißen, Zwei-Komponentenspritzen oder dergleichen miteinander verbunden sein. Vorzugsweise bestehen deshalb beide Abschnitte aus einem Elastomer unterschiedlicher Gummielastizität.

Eine andere Lösung der Erfindungsaufgabe, die gegebenenfalls mit der vorgenannten Lösung kombiniert werden kann, besteht darin, daß der Borstenträger aus wenigstens zwei übergangslos ineinander übergehenden Abschnitten besteht, von denen der stielnahe Abschnitt sich mit einem Keilwinkel β zu dem übergangslos anschließenden vorderen Abschnitt und dieser sich mit einem Keilwinkel α zum vorderen Ende verjüngt, wobei α<β ist.

Durch die unterschiedlichen Keilwinkel der beiden Abschnitte des Borstenträgers ergeben sich entsprechend unterschiedliche Querschnitte bzw. Trägheitsmomente, die zu einer unterschiedlich starken Auslenkung der beiden Abschnitte, innerhalb jedes Abschnittes aber zu einer kontinuierlichen Auslenkung führen.

Die letztgenannte Ausführung läßt sich noch dadurch optimieren, daß der Borstenträger sich vom stielnahen Bereich zum Ende des Bürstenkopfs unter einem kontinuierlich degressiven Keilwinkel verjüngt. Der Rücken bildet also eine vom stielnahen Bereich mit einem relativ großen Querschnitt zum vorderen Ende kontinuierlich gekrümmte Fläche mit einem geringsten Querschnitt des Borstenträgers am vorderen Ende.

Um eine einwandfreie Führung des Bürstenkopfs zu gewährleisten, ist der stielnahe Abschnitt über einen ihm gegenüber weniger elastischen kurzen Abschnitt an den Stiel angeschlossen.

Sofern zwischen dem Stiel und dem Bürstenkopf, wie bei Zahnbürsten häufiger der Fall, ein gegenüber beiden im Querschnitt reduzierter, elastisch nachgiebiger Hals angeordnet ist, geht dieser Hals mit einem sich stetig vergrößernden Querschnitt geringerer Biegeelastizität in den stielnahen Abschnitt des Bürstenkopfs über.

Durch den biegeelastischen Hals kann der Bürstenkopf in seiner Gesamtheit gegenüber dem Stiel ausgelenkt werden, um beispielsweise auch auf im wesentlichen ebenen Konturen des Gebisses einen zu hohen Andruck zu vermeiden. Durch den im Übergangsbereich zwischen Hals und elastischem Abschnitt des Bürstenkopfs vorhandenen größeren Querschnitt wird in diesem Bereich eine Querelastizität vermieden, welche die Führung des Bürstenkopfs erschweren würde.

Der Bürstenkopf kann am Stiel formschlüssig und auswechselbar befestigt, selbstverständlich aber auch formschlüssig mit diesem verbunden sein. Die auswechselbare Befestigung ergibt den Vorteil, daß der Bürstenkopf bei Verschleiß der Borsten ausgetauscht werden kann, was aus hygienischen und zahnmedizinischen Gründen in relativ kurzen Zeitabständen wünschenswert ist.

Besteht der vordere Abschnitt aus einem Elastomer, so kann weiterhin mit Vorteil vorgesehen sein, daß er mit die Schmalseiten des Bürstenkopfs bildenden schmalen Streifen den stielnahen Abschnitt umgreift, um auch in diesem härteren Bereich des Bürstenkopfs eine elastische Schicht zu erhalten, die als Schleimhautschutz wirkt.

In einer weiteren Ausführung untergreift der vordere Abschnitt aus dem Elastomer wenigstens den stielnahen Abschnitt auf dessen Unterseite schichtartig, wobei die Schicht aus dem Elastomer bis auf die Unterseite des Halses reichen kann. Damit sind alle bei der Benutzung der Zahnbürste dem Zahnfleisch zugekehrten Flächen gummielastisch ausgebildet.

Diese Ausführung gibt ferner die Möglichkeit, sämtliche Borsten des Bürstenkopfs in dem Elastomer zu befestigen, beispielsweise durch Verschweißen, Verschmelzen oder durch Einspritzen. Dies hat den Vorteil, daß die Befestigung der Borsten in einem einzigen Arbeitsgang erfolgen kann und alle Borsten unter gleichen Bedingungen im gleichen Werkstoff befestigt sind und damit auch gleiche Auszugsfestigkeit besitzen. Ferner sind die Borsten an ihren befestigungsseitigen Enden elastisch gelagert, so daß sie an ihren Enden bis zu einem gewissen Grad ausweichen können, wodurch eine weitere Kontrolle des Andrucks der Borsten gegeben ist.

Gemäß einem weiteren Ausführungsbeispiel kann der Borstenträger zu den Borsten kontinuierlich oder diskontinuierlich konkav gekrümmt sein, um in der drucklosen Ausgangslage eine Anpassung an die konvexe Außenkontur des Gebisses zu ermöglichen.

Die die Enden der Borsten einschließende Hüllfläche kann im wesentlichen eine Ebene sein, wobei die Borstenenden innerhalb eines Bündels oder einzelne Bündel oder Gruppen von Bündeln gegenüber dieser Hüllfläche vorspringen oder zurückbleiben können, um auf der Zahnfläche und in den Zahnzwischenräumen eine optimale Wirkung zu erzielen.

Stattdessen kann vorgesehen sein, daß die die Enden der Borsten einschließende Hüllfläche zu den Borsten kontinuierlich oder diskontinuierlich konkav gekrümmt ist, wobei vorzugsweise die Borsten bzw. Bündel in dem vorderen Abschnitt des Bürstenkopfs eine zu dessen Ende zunehmende Länge aufweisen. Auch hierdurch ist eine bestmögliche Anpassung an die Außenkontur des Gebisses gegeben.

Nachstehend ist die Erfindung anhand von in der Zeichnung wiedergegebenen Ausführungsbeispielen beschrieben. In der Zeichnung zeigen:
- Fig. 1: eine Seitenansicht einer Zahnbürste mit dem Bürstenkopf im Schnitt;
- Fig. 2: eine Draufsicht auf die Zahnbürste gemäß Fig. 1;
- Fig. 3: eine der Fig. 1 entsprechende Darstellung der Zahnbürste in einer Benutzungslage;
- Fig. 4: eine abgebrochene Darstellung des Bürstenkopfs;
- Fig. 5: eine der Fig. 1 entsprechende Darstellung der Zahnbürste in einer anderen Ausführungsform;
- Fig. 6: einen Schnitt des Bürstenkopfs in einer anderen Ausführung;
- Fig. 7: eine Draufsicht auf den Bürstenkopf in einer weiteren Ausführung;
- Fig. 8: eine Ansicht des Bürstenkopfs in einer gegenüber Fig. 1 und Fig. 5 abgewandelten Ausführung.
- Fig. 9: eine der Fig. 8 entsprechende Darstellung einer dritten Ausführungsform des Bürstenkopfs;
- Fig. 10: eine Seitenansicht einer weiteren Ausführungsform der Zahnbürste und
- Fig. 11: eine Ansicht auf die Unterseite der Zahnbürste gemäß Fig. 10.

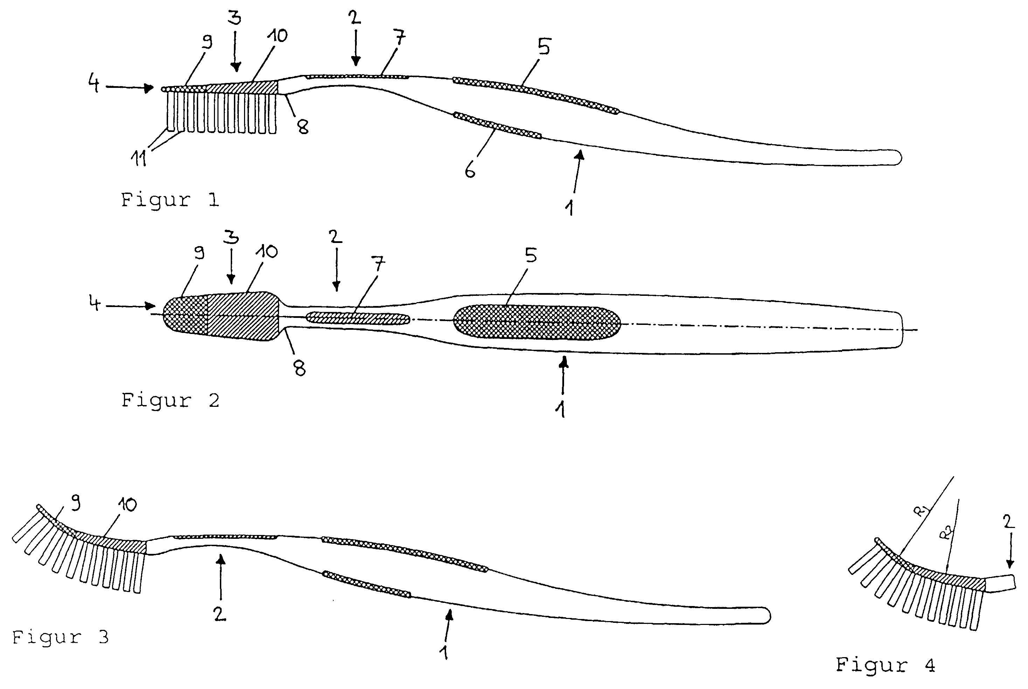

Die Zahnbürste gemäß Fig. 1 besteht aus einem ergonomisch geformten, im wesentlichen starren Stiel bzw. Griff 1, einem daran anschließenden biegeelastischen Hals 2 und einem Bürstenkopf 3, der sich in der Zeichenebene gemäß Fig. 2 zu einem gerundetem Ende 4 verjüngt. Der vorzugsweise aus einem Hartkunststoff hergestellte Griff 1 kann an einer Ober- und Unterseite Griffauflagen 5, 6 aufweisen, die beispielsweise aus einem Elastomer bestehen. In dem verjüngten Hals 2 kann eine die Biegeelastizität bestimmende Feder 7 eingelegt sein, die aus einem Kunststoff mit anderem Elastizitätsmodul als das sie umgebende Kunststoffmaterial besteht.

Der Hals 2 weist am Übergang 8 zum Bürstenkopf 3 einen sich vergrößernden Querschnitt auf, so daß der Übergangsbereich 8 im wesentlichen starr ist. Der Bürstenkopf 3 weist einen Borstenträger auf, der aus einem vorderen Abschnitt 9 mit dem gerundeten Ende 4 und einem stielnahen Abschnitt 10 besteht, von denen zumindest ersterer, vorzugsweise aber beide aus einem Elastomer bestehen. Wie aus Fig. 1 ersichtlich, verjüngt sich der Bürstenkopf 3 in seinem Längsquerschnitt keilförmig zum vorderen Ende 4. An der ebenen Unterseite des Bürstenkopfs 3 sind die Borsten in Form von Bündeln 11 angeordnet, die beispielsweise durch Schweißen, Einspritzen oder in anderer Weise so befestigt sind, daß ihre Enden auf einer ebenen Hüllfläche liegen.

Die den vorderen Abschnitt 9 und den stielnahen Abschnitt 10 des Borstenträgers bildenden Elastomere sowie die Länge dieser Abschnitte in Richtung der Längsachse und der Querschnittsverlauf sind so gewählt, daß bei Benutzung der Zahnbürste beispielsweise an der Innenkontur des Gebisses der Bürstenkopf die in Fig. 3 gezeigte Auslenkung erfährt, d. h. der vordere Abschnitt 9 mit einem kleineren Krümmungsradius gebogen wird als der stielnahe Abschnitt 10, wie dies in Fig. 4 anhand der Radien R₁ und R₂ angedeutet ist.

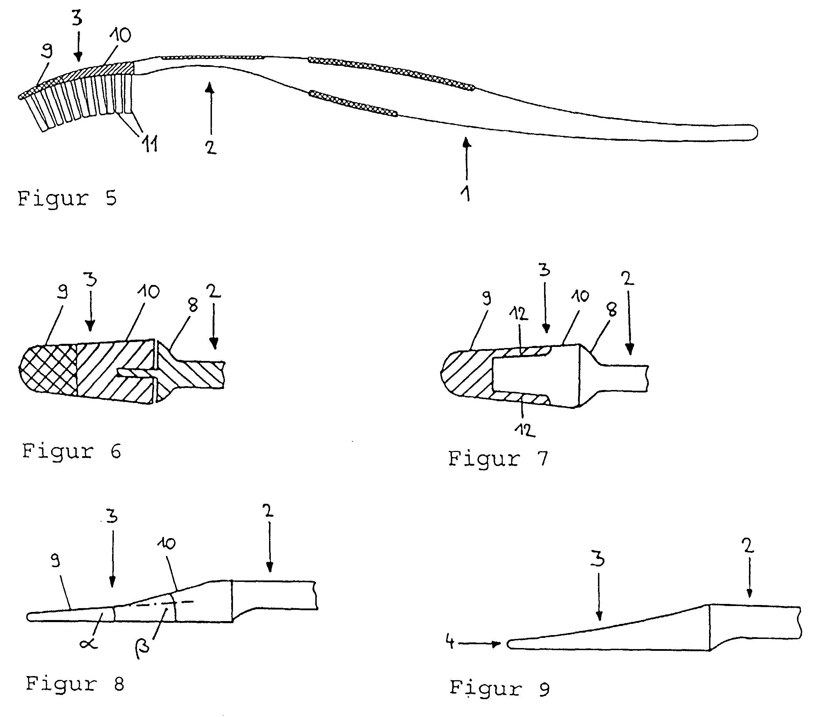

Bei der in Fig. 5 gezeigten Ausführungsform ist der Bürstenkopf 3 zu den Borstenbündeln 11 hin schwach konkav gekrümmt, um in der drucklosen Ausgangslage eine Anpassung an die Außenkontur des Gebisses zu erreichen, in dem die Enden der Borstenbündel auf einer entsprechen konkaven Hüllfläche liegen. Ansonsten entspricht der Aufbau des Bürstenkopfs demjenigen gemäß Fig. 1.

Statt der in Fig. 1 und 5 gezeigten stoffschlüssigen Anbindung des Bürstenkopfs 3 an den Übergangsbereich 8 des Halses 2 kann der Bürstenkopf 3 auch, wie Fig. 6 zeigt, formschlüssig und auswechselbar am Hals 2 befestigt sein.

Bei dem Ausführungsbeispiel gemäß Fig. 7 übergreift der vordere Abschnitt 9 aus dem weicheren Elastomer den stielnahen Abschnitt 10 an den Schmalseiten des Bürstenkopfs mit Streifen 12, die somit einen wirksamen Schleimhautschutz über fast die gesamte Längsausdehnung des Bürstenkopfs bilden.

Bei dem Ausführungsbeispiel gemäß Fig. 8 ist der Bürstenkopf 2 einstückig aus einem biegeelastischen Kunststoff gespritzt. Er weist wiederum einen keilförmigen Längsquerschnitt auf, wobei der stielnahe Abschnitt 10 einen Keilwinkel β und der vordere Abschnitt 9 einen Keilwinkel α aufweist. Dabei ist der Keilwinkel α kleiner als der Keilwinkel β, so daß eine vom stielnahen Bereich zum vorderen Ende hin variierende Biegeelastizität mit einer größeren Elastizität im Bereich des vorderen Abschnittes 9 gegeben ist.

Statt der durch die verschiedenen Teilwinkel gegebenen Diskontinuität beim Ausführungsbeispiel gemäß Fig. 8 kann der Keilwinkel des Bürstenkopfs sich vom stielnahen Bereich zum vorderen Ende 4 hin auch kontinuierlich degressiv ändern, so daß bei gegebenem Andruck eine vom stielnahen Bereich des Bürstenkopfs 3 zum Ende 4 hin zunehmende Auslenkung des Bürstenkopfs 3 einstellt.

Selbstverständlich können die Ausführungsformen nach Fig. 8 und 9 auch mit derjenigen nach Fig. 1 und 5 kombiniert werden, also beispielsweise die Keilwinkel bzw. deren Verlauf auch bei Abschnitten 9 und 10 aus Elastomeren verwirklicht sein.

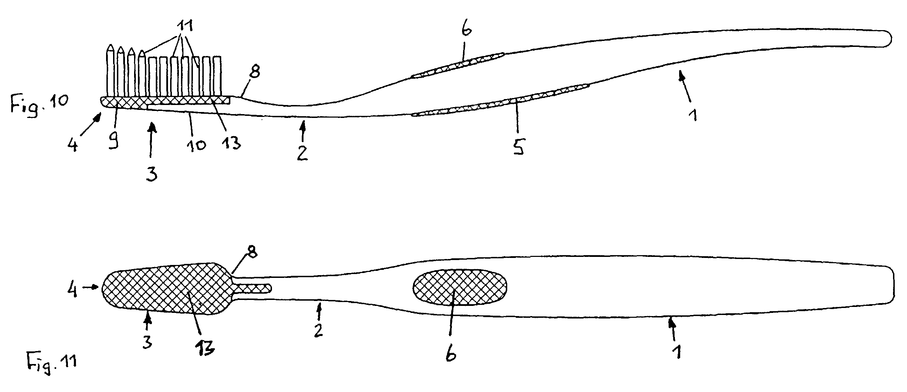

Bei dem Ausführungsbeispiel nach Fig. 10 und 11 erstreckt sich das Elastomer des vorderen Abschnittes 9 in Form einer Schicht 13 unter den hinteren Abschnitt 10, der aus dem gleichen Material wie der Hals 2 und der Stiel 1 bestehen kann, aber aufgrund seiner reduzierten Dicke bei Andruck der Zahnbürste ausreichend nachgibt. Bei dieser Ausführungsform sind die Borsten 11 ausschließlich in den Elastomer-Teilen 9, 13 befestigt, z.B. eingeschweißt oder eingespritzt. Die Schicht 13 kann sich auch über den Übergang 8 bis in den Bereich des Halses 2 erstrecken.

### Prior Art Publications

| | | |
|---|---|---|
| (1) | US 1,327,807 A | (Burleigh) |
| (2) | US 2,445,657 A | (Bennett) |
| (3) | US 5,373,602 A | (Bang) |
| | | |
| (4) | US 2,631,320 A | (Bressler) |
| (5) | US 4,691,405 A | (Reed) |
| (6) | WO 92/17092 A | (Lingner & Fischer) |
| (7) | EP 0 577 656 B1 | (SmithKline Beecham) |
| (8) | WO 97/07707 A | (SmithKline Beecham) |
| (9) | WO 97/20484 A | (Unilever) |
| (10) | WO 97/24048 A | (Colgate-Palmolive) |
| (11) | WO 97/25899 A | (The Procter & Gamble) |
| | | |
| (12) | WO 97/25900 A | (The Procter & Gamble) |
| (13) | DE 297 00 207 U1 | (SmithKline Beecham) |
| (14) | US 4,330,896 A | (Booth) |
| (15) | WO 92/17094 A | (Bradley) |
| (16) | DE 195 38 569 A | (Coronet) |

## Patentansprüche

1. Reinigungsbürste aus Kunststoff, **dadurch gekennzeichnet, daß** der Borstenträger aus zwei in dessen Längsrichtung hintereinander angeordneten und übergangslos miteinander verbundenen Abschnitten (9, 10) aus Werkstoffen verschiedener Eigenschaften und wenigstens der vordere Abschnitt (9) aus einem Elastomer gebildet ist, und daß die Werkstoffe, die Querschnitte und die Biegelänge der Abschnitte so gewählt sind, daß der vordere Abschnitt mit kleinerem Krümmungsradius (R₁) als der andere Abschnitt (10) auslenkbar ist.

2. Reinigungsbürste nach Anspruch 1, **dadurch gekennzeichnet, daß** die beiden Abschnitte (9, 10) stoffschlüssig miteinander verbunden sind.

3. Reinigungsbürste nach Anspruch 1 oder 2, **dadurch gekennzeichnet, daß** beide Abschnitte (9, 10) aus einem Elastomer gebildet sind.

4. Reinigungsbürste aus Kunststoff, insbesondere nach Anspruch 1, insbesondere Zahnbürste, mit einem Stiel und einem länglichen Bürstenkopf, der aus einem sich im Längsquerschnitt vom Stiel zum vorderen Ende des Bürstenkopfs verjüngenden Borstenträger und daran befestigten Borsten besteht, wobei der Borstenträger bei Überschreiten eines bestimmten Andrucks der Borsten an die zu reinigende Fläche elastisch nachgiebig auslenkbar ist, **dadurch gekennzeichnet, daß** der Borstenträger aus wenigstens zwei übergangslos ineinander übergehenden Abschnitten besteht, von denen der stielnahe Abschnitt (10) sich mit einem Keilwinkel β zu dem übergangslos anschließenden vorderen Abschnitt (9) und dieser sich mit einem Keilwinkel α zum vorderen Ende 9 verjüngt, wobei α < β ist.

5. Reinigungsbürste nach Anspruch 4, **dadurch gekennzeichnet, daß** der Borstenträger sich vom stielnahen Bereich zum Ende (4) des Bürstenkopfs (3) unter einem kontinuierlich degressiven Keilwinkel verjüngt.

6. Reinigungsbürste nach einem der Ansprüche 1 bis 5, **dadurch gekennzeichnet, daß** der stielnahe Abschnitt (10) über einen ihm gegenüber weniger elastischen kurzen Abschnitt (8) an den Stiel (1) angeschlossen ist.

7. Reinigungsbürste nach einem der Ansprüche 1 bis 6, wobei zwischen Stiel (1) und Bürstenkopf (3) ein gegenüber beiden im Querschnitt reduzierter, elastisch nachgiebiger Hals (2) angeordnet ist, **dadurch gekennzeichnet, daß** der Hals (2) mit einem Abschnitt (8) mit sich stetig vergrößerndem Querschnitt geringer Biegeelastizität in den stielnahen Abschnitt (10) des Bürstenkopfs (3) übergeht.

8. Reinigungsbürste nach einem der Ansprüche 1 bis 7, **dadurch gekennzeichnet, daß** der Bürstenkopf (3) am Stiel (1) formschlüssig und auswechselbar befestigt ist.

9. Reinigungsbürste nach einem der Ansprüche 1 bis 8, **dadurch gekennzeichnet, daß** der vordere Abschnitt (9) aus einem Elastomer den stielnahen Abschnitt (10) mit die Schmalseiten des Bürstenkopfs (3) bildenden schmalen Streifen (12) umgreift.

10. Reinigungsbürste nach einem der Ansprüche 1 bis 9, **dadurch gekennzeichnet, daß** das Elastomer des vorderen Abschnitts wenigstens den stielnahen Abschnitt (8) auf dessen Unterseite schichtartig untergreift.

11. Reinigungsbürste nach einem der Ansprüche 3 bis 10, **dadurch gekennzeichnet, daß** die Schicht (13) aus dem Elastomer bis auf die Unterseite des Halses (2) reicht.

12. Reinigungsbürste nach einem der Ansprüche 3 bis 11, **dadurch gekennzeichnet, daß** sämtliche Borsten (11) des Bürstenkopfs (3) in dem Elastomer befestigt sind.

13. Reinigungsbürste nach einem der Ansprüche 1 bis 12, **dadurch gekennzeichnet, daß** der Borstenträger zu den Borsten (11) kontinuierlich oder diskontinuierlich konkav gekrümmt ist.

14. Reinigungsbürste nach einem der Ansprüche 1 bis 13, **dadurch gekennzeichnet, daß** die die Enden der Borsten (11) einschließende Hüllfläche eine Ebene ist.

15. Reinigungsbürste nach einem der Ansprüche 1 bis 13, **dadurch gekennzeichnet, daß** die die Enden der Borsten (11) einschließende Hüllfläche kontinuierlich oder diskontinuierlich konkav gekrümmt ist.

16. Reinigungsbürste nach Anspruch 15, **dadurch gekennzeichnet, daß** die Borsten (11) in dem vorderen Abschnitt des Bürstenkopfs (3) eine zu dessen Ende zunehmende Länge aufweisen.

## Claims

1. Plastic cleaning brush, charaterized in that the bristle carrier comprises two, longitudinally successively arranged portions (9, 10) interconnected without transition and made from materials having different characteristics and at least the front portion (9) is formed from an elastomer and that the materials, cross-sections arid bending length of the portions are chosen in such a way that the front portion is deflectable with a smaller radius of curvature (R₁) than the other portion (10).

2. Cleaning brush according to claim 1, **characterized in that** the two portions (9, 10) are integrally joined together.

3. Cleaning brush according to claim 1 or 2, **characterized in that** both portions (9, 10) are formed from an elastomer.

4. Plastic cleaning brush, particularly according to claim 1, particularly toothbrush, having a handle and an elongated brush head, which comprises a bristle carrier tapering in longitudinal cross-section from the handle to the front end of the brush head and bristles fixed thereto, where on exceeding a given pressure of bristles on the surface to be cleaned, the bristle carrier can be deflected in an elastically flexible manner, **characterized in that** the bristle carrier comprises at least two portions passing into one another without transition, whereof the handle-near portion (10) tapers at a wedge angle β to the transitionless connected front portion (9) which itself tapers at a wedge angle α to the free end of the brush head (3), in which α < β.

5. Cleaning brush, according to claim 4, **characterized in that** the bristle carrier tapers from the handle-near area to the end (4) of the brush head (3) under a continuous, decreasing wedge angle.

6. Cleaning brush according to on of the claims 1 to 5, **characterized in that** the handle-near portion (10) is connected to the handle (1) by means of a short portion (8) which is less resilient than the handle-near portion (10).

7. Cleaning brush according to one of the claims 1 to 6, in which between the handle (1) and the brush head (3) is provided an elastic, flexible neck having a reduced cross-section compared with said two parts, **characterized in that** the neck (2) passes into the handle-near portion (10) of the brush head (3) with a portion (8) having a constantly increasing cross-section of reduced bending elasticity.

8. Cleaning brush according to one of the claims 1 to 7, **characterized in that** the brush head (3) is positively and interchangeably fixed to the handle (1).

9. Cleaning brush according to one of the claims 1 to 8, **characterized in that** the front portion (9) made from an elastomer engages round the handle-near portion (10) with narrow strips (12) forming the narrow sides of the brush head (3).

10. Cleaning brush according to one of the claims 1 to 9, **characterized in that** the elastomeric material of the front portion (9) extends as a layer (13) at least under the handle-near position (10).

11. Cleaning brush according to one of the claims 3 to 10, **characterized in that** the elastomeric layer (13) extends up to the under side of the neck.

12. Cleaning brush according to one of the claims 3 to 11, **characterized in that** all bristles (11) of the brush head (3) are fixed to the elastomer.

13. Cleaning brush according to one of the claims 1 to 12, charaterized in that the bristle carrier is continuously or discontinuously concavely curved in a direction facing the bristles (11).

14. Cleaning brush according to one of the claims 1 to 13, charaterized in that the envelope enclosing the ends of the bristles (11) is a plane.

15. Cleaning brush according to one of the claims 1 to 14, **characterized in that** the envelope enclosing the ends of the bristles (11) is continuously or discontinuously concavely curved.

16. Cleaning brush according to claim 15, **characterized in that** in the front portion of the brush head the bristles (11) have a length increasing towards its end.

## Revendications

1. Brosse de nettoyage en matière plastique, en particulier brosse à dents comprenant un manche et une tête de brosse oblongue formée d'un support de poils allant en se rétrécissant dans la section longitudinale du manche vers l'extrémité avant de la tête de brosse sur lequel sont fixés des poils, le support de poils pouvant être incurvé par déformation élastique lorsqu'une pression déterminée des poils sur la surface à nettoyer est dépassée, **caractérisée en ce que** le support de poils est formé de deux parties (9,10) disposées l'une derrière l'autre dans son sens longitudinal, reliées l'une à l'autre sans transition et réalisées dans des matériaux de propriétés différentes et qu'au moins la partie avant (9) est réalisée dans un élastomère, et **en ce que** les matériaux, les sections et la longueur de flexion des parties sont choisis de telle façon que la partie avant peut être incurvée selon un rayon de courbure (R₁) inférieur à celui de l'autre partie (10).

2. Brosse de nettoyage selon la revendication 1, **caractérisée en ce que** les deux parties (9,10) sont solidarisées l'une à l'autre par un assemblage par liaison de matière.

3. Brosse de nettoyage selon la revendication 1 ou 2, **caractérisée en ce que** les deux parties (9,10) sont réalisées dans un élastomère.

4. Brosse de nettoyage en matière plastique, en particulier selon la revendication 1, en particulier brosse à dents comprenant un manche et une tête de brosse oblongue formée d'un support de poils allant en se rétrécissant dans la section longitudinale du manche vers l'extrémité avant de la tête de brosse sur lequel sont fixés des poils, le support de poils pouvant être incurvé par déformation élastique lorsqu'une pression déterminée des poils sur la surface à nettoyer est dépassée, **caractérisée en ce que** le support de poils est constitué d'au moins deux parties passant sans transition l'une dans l'autre, dont la partie (10) adjacente au manche se rétrécit selon un angle de bord d'attaque β vers la partie avant (9) qui y est reliée sans transition, et dont cette dernière se rétrécit selon un angle de bord d'attaque α vers l'extrémité avant (9), α étant inférieur à β.

5. Brosse de nettoyage selon la revendication 4, **caractérisée en ce que** le support de poils va en se rétrécissant depuis la zone adjacente au manche jusqu'à l'extrémité (4) de la tête de brosse (3) sous un angle de bord d'attaque continûment dégressif.

6. Brosse de nettoyage selon l'une quelconque des revendications 1 à 5, **caractérisée en ce que** la partie (10) adjacente au manche est reliée au manche (1) par une partie courte (8) à élasticité inférieure à la sienne.

7. Brosse de nettoyage selon l'une quelconque des revendications 1 à 6, dans laquelle un col (2) est disposé entre le manche (1) et la tête de brosse (3), de section réduite par rapport à ceux-ci et déformable élastiquement, **caractérisée en ce que** le col (2) passe par une partie (8) à flexibilité élastique réduite et à section allant continuellement en augmentant dans la partie (10) adjacente au manche de la tête de brosse (3).

8. Brosse de nettoyage selon l'une quelconque des revendications 1 à 7, **caractérisée en ce que** la tête de brosse (3) est fixée au manche (1) à ajustement de forme et échangeable.

9. Brosse de nettoyage selon l'une quelconque des revendications 1 à 8, **caractérisée en ce que** la partie avant (9) réalisée dans un élastomère entoure la partie (10) adjacente au manche par des bandes étroites (12) formant les faces étroites de la tête de brosse (3).

10. Brosse de nettoyage selon l'une quelconque des revendications 1 à 9, **caractérisée en ce que** l'élastomère de la partie avant prend la sous-face inférieure au moins de la partie (8) adjacente au manche à la manière d'un revêtement.

11. Brosse de nettoyage selon l'une quelconque des revendications 3 à 10, **caractérisée en ce que** la couche (13) d'élastomère s'étend jusqu'à la sous-face du col (2).

12. Brosse de nettoyage selon l'une quelconque des revendications 3 à 11, **caractérisée en ce que** l'ensemble des poils (11) de la tête de brosse (3) sont fixés dans l'élastomère.

13. Brosse de nettoyage selon l'une quelconque des revendications 1 à 12, **caractérisée en ce que** le support de poils présente une courbure concave continue ou discontinue en direction des poils (11).

14. Brosse de nettoyage selon l'une quelconque des revendications 1 à 13, **caractérisée en ce que** la surface enveloppe renfermant les extrémités des poils (11) est plane.

15. Brosse de nettoyage selon l'une quelconque des revendications 1 à 13, **caractérisée en ce que** la surface enveloppe renfermant les extrémités des poils (11) présente une courbure concave continue ou discontinue.

16. Brosse de nettoyage selon la revendication 15, **caractérisée en ce que** les poils (11) de la partie avant de 1a tête de brosse (3) présentent une longueur allant en augmentant vers l'extrémité de celle-ci.
